Europäisches Patentamt

European Patent Office

Office européen des brevets

(11) Numéro de publication: **0 390 641**
**A1**

## (12) DEMANDE DE BREVET EUROPEEN

(21) Numéro de dépôt: 90400754.9

(51) Int. Cl.5: **G02B 26/08**

(22) Date de dépôt: **20.03.90**

(30) Priorité: 31.03.89 FR 8904304

(43) Date de publication de la demande:
**03.10.90 Bulletin 90/40**

(84) Etats contractants désignés:
**DE ES GB IT NL**

(71) Demandeur: **GENERAL ELECTRIC CGR S.A.**
**100, rue Camille-Desmoulins**
**F-92130 Issy les Moulineaux(FR)**

(72) Inventeur: **Desnoux, Valérie**

Cabinet Ballot-Schmit, 7, rue Le Sueur
**F-75116 Paris(FR)**
Inventeur: **Pelat, Jean**
Cabinet Ballot-Schmit, 7, rue Le Sueur
**F-75116 Paris(FR)**
Inventeur: **Thirouard, Michel**
Cabinet Ballot-Schmit, 7, rue Le Sueur
**F-75116 Paris(FR)**

(74) Mandataire: **Ballot, Paul Denis Jacques et al**
**Cabinet Ballot-Schmit 7, rue le Sueur**
**F-75116 Paris(FR)**

(54) **Distributeur optique à miroir tournant.**

(57) L'invention concerne les distributeurs optiques qui permettent de dévier un faisceau lumineux dans différentes directions.

L'invention réside dans le fait que l'on utilise un seul miroir semi-réfléchissant 30 porté par un plateau 31 qui tourne grâce à un moteur 40. Le miroir peut pivoter autour d'un axe 33 lorsque la butée 46 est escamotée (position Z de l'encoche et de l'ergot 38) et prendre une position 52 dans laquelle il n'intercepte pas le faisceau lumineux 14. Dans les autres positions (X et Y) le miroir intercepte le faisceau 14 et le dévie dans les directions souhaitées.

L'invention est applicable aux appareils de radiologie pour dévier le faisceau lumineux vers différentes caméras.

FIG. 4

EP 0 390 641 A1

## DISTRIBUTEUR OPTIQUE A MIROIR TOURNANT

L'invention concerne les dispositifs qui permettent d'orienter un faisceau lumineux vers plusieurs directions différentes. Elle concerne plus particulièrement de tels dispositifs qui réalisent une distribution du faisceau suivant trois voies à l'aide d'un miroir tournant.

Les distributeurs optiques à trois voies sont connus et sont, par exemple, utilisés dans certains appareils de radiologie pour orienter le faisceau lumineux résultant du convertisseur rayonnement X/rayonnement lumineux vers divers appareils de traitement de l'image lumineuse. Ces appareils sont, par exemple, une caméra vidéo seule, une caméra photo ou encore une caméra cinéma. Ainsi, il est habituel d'obtenir simultanément une image sur la caméra vidéo et la caméra photo ou sur la caméra vidéo et la caméra cinéma, ou encore une image sur la caméra vidéo uniquement.

Les figures schématiques 1 et 2 montrent deux manières connues de réaliser de tels distributeurs optiques trois voies.

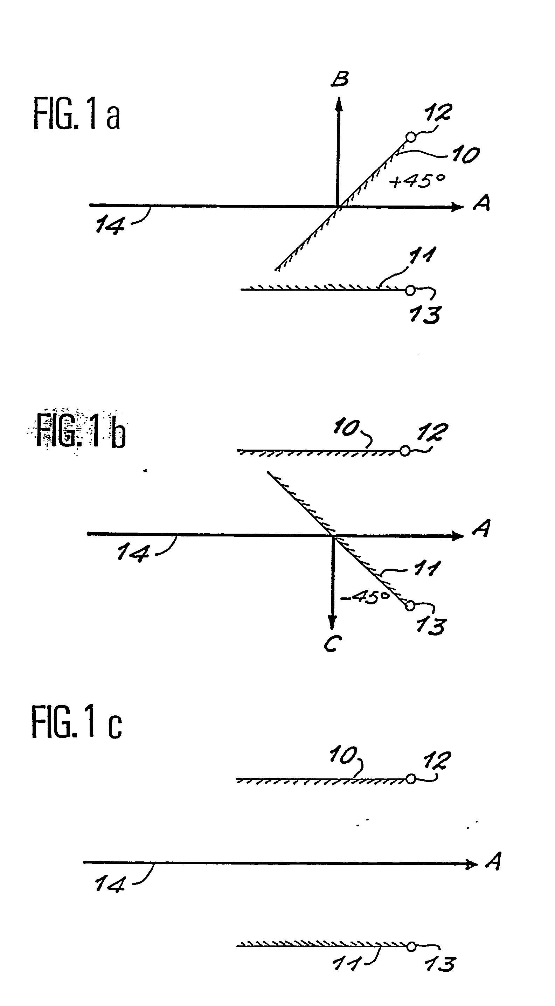

Sur la figure 1, le distributeur optique comprend deux miroirs semi-réfléchissants 10 et 11 qui pivotent respectivement autour de deux axes 12 et 13 perpendiculaires au plan du dessin. Ces deux axes 12 et 13 sont disposés de part et d'autre du trajet d'un faisceau lumineux 14 à dévier.

Dans la position des miroirs de la figure 1a, le miroir 11 est en position parallèle au faisceau 14 et ne l'intercepte pas tandis que le miroir 12 est incliné à 45° par rapport au faisceau; ce dernier dévie une partie du faisceau 14 dans la direction B qui est à 90° de celle du faisceau incident 14; l'autre partie traverse le miroir 10 dans la direction A.

Dans la position des miroirs de la figure 1b, le miroir 10 est en position parallèle au faisceau 14 et ne l'intercepte pas tandis que le miroir 11 est incliné à 45° par rapport au faisceau; dans ce cas, une partie du faisceau 14 est dévié dans la direction C qui est à 90° de celle du faisceau incident 14 et à 180° de la direction B; l'autre partie traverse le miroir 11 dans la direction A.

Enfin, dans la position des miroirs de la figure 1c, les deux miroirs 10 et 11 sont tous deux parallèles au faisceau 14 et ne l'interceptent pas; dans ce cas, le faisceau incident 14 n'est pas réfléchi par un miroir et n'est donc pas dévié.

Le distributeur optique qui vient d'être décrit présente l'avantage d'être compact mais il nécessite deux miroirs, deux mécanismes de rotation et deux moteurs de rotation à positionnement précis pour retrouver le même angle d'inclinaison des miroirs.

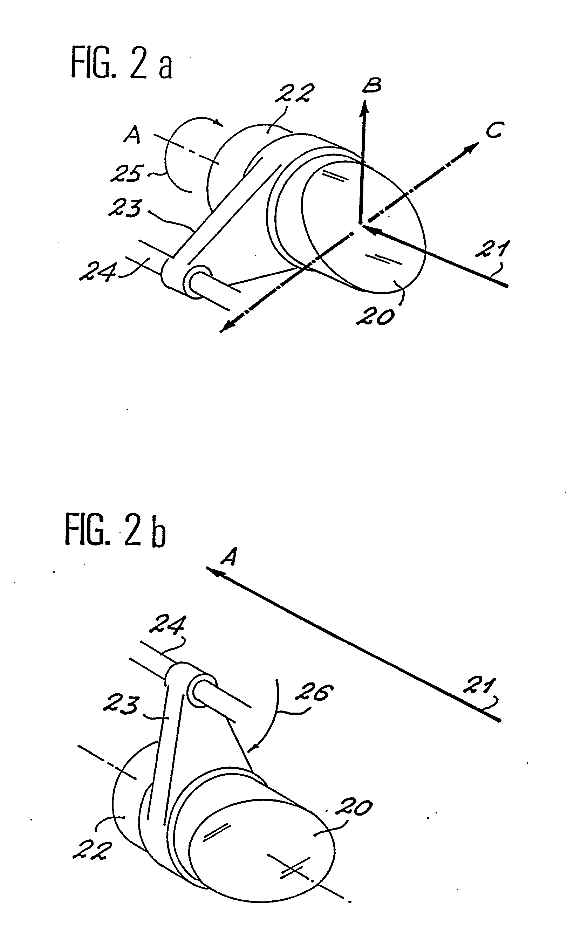

Un autre distributeur optique à trois voies selon l'art antérieur sera décrit en relation avec la figure 2. Il comprend un miroir semi-réfléchissant 20 qui est incliné à 45° par rapport à un faisceau incident 21. Ce miroir est fixé sur une tourelle tournante 22 qui est solidaire d'un bras 23. Ce bras pivote autour d'un axe 24 parallèle au faisceau 21. Quant à la tourelle 22, elle peut tourner autour de l'axe du faisceau 21.

Dans la position de la figure 2a, le faisceau incident 21 est transmis pour partie dans la direction A et est dévié pour le reste dans la direction B perpendiculaire à celle du faisceau incident.

Si la tourelle 22 tourne d'un angle de 90° dans le sens de la flèche 25, le faisceau incident est transmis pour partir dans la direction A et est dévié pour le reste dans la direction C perpendiculaire à celles du faisceau incident et de la direction B.

Par contre, si la tourelle tourne d'un angle de 90° dans le sens inverse de la flèche 25, le faisceau incident est transmis pour partie dans la direction A et est dévié pour le reste dans la direction D perpendiculaire à celles du faisceau incident et la direction B.

Enfin, le pivotement du bras 23 autour de l'axe 24 dans le sens de la flèche 26 escamote la tourelle 22 du trajet du faisceau incident 21 et ce dernier est donc transmis directement vers A sans atténuation.

Le distributeur optique de la figure 2 permet d'obtenir quatre voies optiques différentes, ce qui n'est pas nécessaire dans le cas d'un appareil de radiologie, mais il nécessite deux moteurs de rotation : l'un pour la tourelle 22 et l'autre pour le bras 23 ainsi que leur mécanisme associé. En outre, l'escamotage de la tourelle conduit à un encombrement important.

Le but de la présente invention est donc de réaliser un distributeur optique à miroir tournant qui ne présente pas les inconvénients précités des distributeurs de l'art antérieur et qui est de construction simple et robuste.

L'invention se rapporte à un dispositif de déflexion d'un faisceau lumineux caractérisé en ce qu'il comprend un plateau motorisé qui tourne autour d'un axe solidaire d'un châssis et disposé perpendiculairement au faisceau lumineux, un miroir semi-réfléchissant porté par le plateau et dont la face réfléchissante est parallèle à l'axe de rotation du plateau, ledit miroir étant normalement en position pour intercepter le faisceau lumineux lorsque le plateau tourne de manière à le dévier dans les directions souhaitées, ledit dispositif comportant des moyens pour faire pivoter le miroir sur un côté autour d'un axe parallèle à l'axe de rotation du plateau de manière à l'escamoter du trajet du faisceau lumineux pour une certaine plage angulaire du plateau par rapport au faisceau lumineux.

Les moyens pour faire pivoter le miroir autour de son axe de rotation comprennent un ergot solidaire du miroir et disposé sur le côté opposé à l'axe de pivotement, une butée de maintien du miroir solidaire du plateau et s'escamotant à partir du début de ladite plage angulaire et une pièce mécanique solidaire du châssis et comportant une rainure dans laquelle vient s'engager et glisser ledit ergot pour ladite plage angulaire, de sorte que le miroir peut pivoter autour de l'axe au fur et à mesure de la rotation du plateau dans ladite plage angulaire et ne plus intercepter le faisceau.

Dans le cas de trois positions angulaires du miroir par rapport au faisceau, le plateau comporte sur sa périphérie trois encoches qui correspondent auxdites positions angulaires, lesdites encoches coopérant avec un ergot élastique solidaire du châssis de manière à arrêter le mouvement du plateau lorsque l'ergot s'engage dans une encoche.

Lorsque le plateau est entraîné en mouvement par un moteur électrique, un interrupteur en série avec le circuit d'alimentation du moteur est associé à l'ergot de manière à couper l'alimentation lorsque l'ergot est engagé dans une encoche.

D'autres caractéristiques et avantages de la présente invention apparaîtront à la lecture de la description suivante d'un exemple particulier de réalisation, ladite description étant faite en relation avec les dessins joints dans lesquels :

- les figures 1a, 1b et 1c, sont des vues schématiques montrant l'arrangement et le fonctionnement d'un distributeur optique à trois voies à deux miroirs tournants selon l'art antérieur,

- les figures 2a et 2b sont des vues schématiques montrant l'arrangement et le fonctionnement d'un distributeur optique à quatre voies selon l'art antérieur,

- les figures 3a, 3b et 3c sont des vues schématiques montrant l'arrangement et le fonctionnement d'un distributeur optique à trois voies selon la présente invention,

- la figure 4 est un schéma montrant une forme de réalisation du distributeur automatique à trois voies selon l'invention ainsi que les diverses positions du miroir pour obtenir les trois voies,

- la figure 5 est une vue de dessus, partie en écorché d'une deuxième forme de réalisation du distributeur optique selon l'invention et,

- la figure 6 est une vue en perspective, partie en écorché, de la deuxième forme de réalisation correspondant à la figure 5.

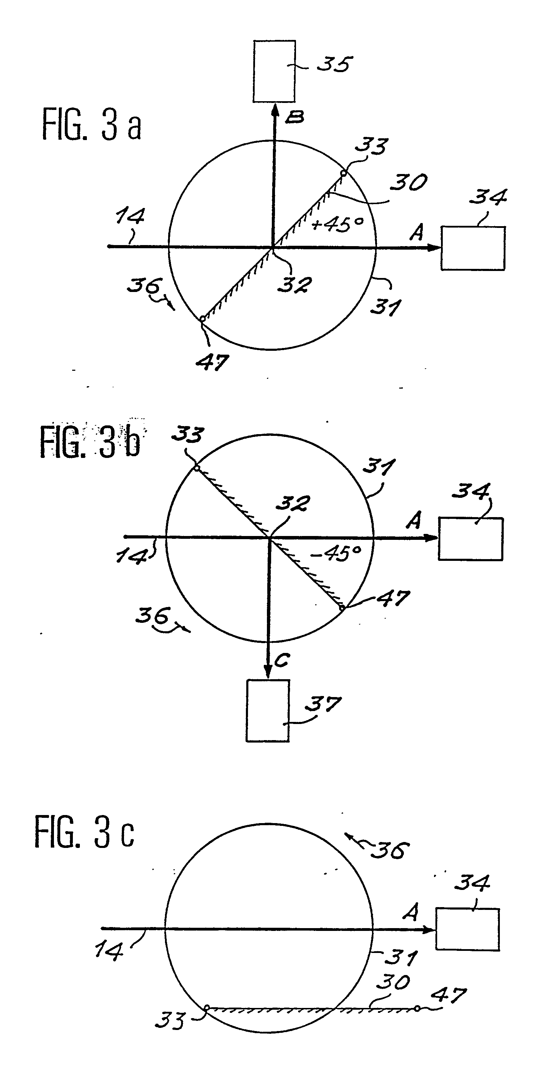

Sur les figures 3a, 3b et 3c, on a représenté de manière schématique un miroir semi-réfléchissant 30 qui est monté sur un plateau 31 tournant autour d'un axe central 32 perpendiculaire au plan du dessin. Le miroir 30 peut pivoter autour d'un axe 33 qui est solidaire du plateau 31. Par ailleurs, le côté du miroir 30 opposé à l'axe 33 comporte un ergot 47 qui, pour une certaine plage angulaire de rotation du plateau 31, coopère avec un guide linéaire non représenté sur la figure 3.

Dans la position de la figure 3a, le faisceau incident 14 est en partie transmis par le miroir 30 dans la direction A vers une caméra vidéo 34 et le reste est réfléchi dans la direction B vers une caméra photo 35.

Dans la position de la figure 3b, c'est-à-dire après une rotation de 90° du plateau 31 dans le sens de la flèche 36, le faisceau incident 14 est également en partie transmis par le miroir 30 dans la direction A vers la caméra vidéo 34 et le reste est réfléchi dans la direction C vers une caméra cinéma 37.

Après une rotation supplémentaire de 90° dans le sens de la flèche 36, le plateau 31 et le miroir 30 sont dans la position de la figure 3c, c'est-à-dire que le miroir n'intercepte plus le faisceau incident 14 et est dans une position dite "de garage" suivant laquelle l'ergot 47 s'est déplacé dans le guide linéaire (non représenté) au fur et à mesure de la rotation du plateau à partir de la position de la figure 3b. Dans ce cas, le faisceau incident est transmis directement et uniquement dans la direction A vers la caméra vidéo 34.

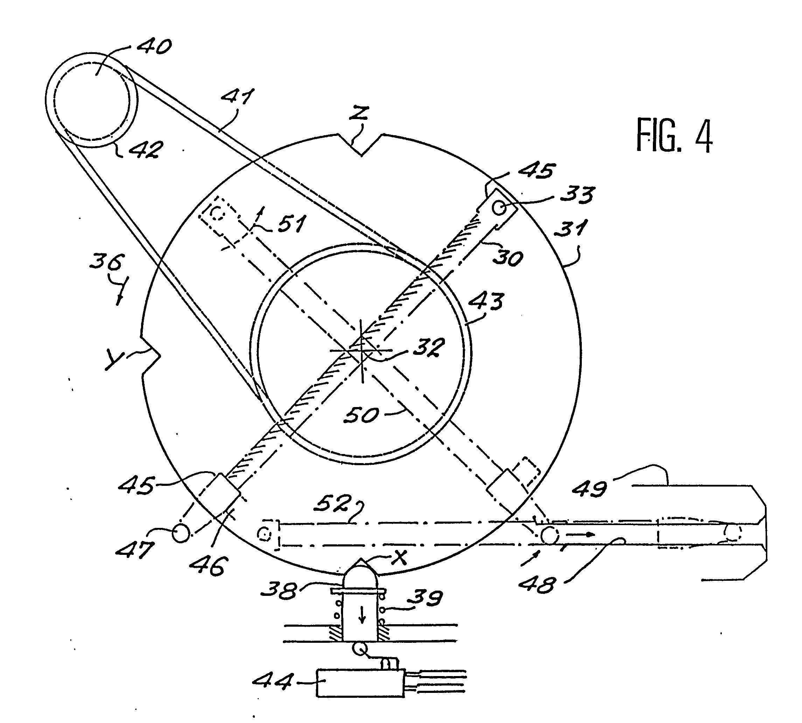

La figure 4 illustre une première manière de réaliser le distributeur optique à trois voies selon l'invention. Les trois positions des figures 3a, 3b et 3c sont obtenues grâce à des encoches X, Y et Z en forme de V pratiquées à la périphérie du plateau 31 et disposées à 90° l'une de l'autre. Les encoches coopèrent avec un ergot 38 de blocage solidaire du châssis (non représenté) qui supporte l'axe 32 du plateau 31. L'ergot 38 est maintenu contre la périphérie du plateau 31 par un ressort 39. Le plateau 31 est entraîné en rotation par un moteur 40, solidaire du châssis, par l'intermédiaire d'une courroie 41 qui s'enroule autour de poulies 42 et 43 qui sont solidaires respectivement du moteur 40 et du plateau 31. L'alimentation électrique du moteur 40 est commandé notamment par un interrupteur 44 qui est associé à l'ergot 38 de manière que l'alimentation électrique du moteur 40 soit coupée lorsque l'ergot est dans l'une quelconque des encoches X, Y ou Z.

Comme indiqué précédemment, le plateau 31 sert de support au miroir 30 qui est maintenu dans un cadre rigide 45. Le miroir 30 peut pivoter par l'intermédiaire de son cadre 45 autour d'un axe 33 disposé à la périphérie du plateau 31 et qui est perpendiculaire au plan du dessin. Pour empêcher le pivotement du miroir, le côté du cadre 45 opposé à celui de l'axe 33 est maintenu en place par une butée de blocage 46 qui est solidaire du plateau 31. Cette butée 46 s'escamote pour certaines positions du plateau, ce qui permet le pivotement du miroir autour de l'axe 33. Du côté de la butée 46, le cadre 45 est pourvu d'un ergot 47 qui, pour une certaine position du plateau 31 vient s'engager dans une rainure de guidage 48 pratiquée dans une pièce 49 qui est fixée sur le châssis (non représenté).

Lorsque l'ergot 38 est engagé dans l'encoche X, le miroir 30 a la position montrée en trait plein sur la figure 4, ce qui correspond à la vue schématique de la figure 3a. Lorsque, à partir de cette position, le plateau 31 est entraîné en rotation par le moteur 40 dans le sens de la flèche 36, l'ergot 38 se désengage de l'encoche X mais reste en contact avec la périphérie du plateau de sorte qu'il s'engage dans l'encoche Y lorsque celle-ci se présente. Dès que l'ergot 38 est dans une encoche X, Y ou Z, il coupe l'alimentation électrique du moteur 40. Dans cette position de l'encoche Y engagée par l'ergot 38, le miroir 30 a la position 50 montrée en traits pointillés sur la figure 4, ce qui correspond à la vue schématique de la figure 3b.

Dès que le plateau quitte la position Y, la butée 46 est escamotée par l'intermédiaire de moyens non représentés sur la figure 4 de sorte que le miroir 30 peut pivoter autour de l'axe 33 dans le sens de la flèche 51 au fur et à mesure de la rotation du plateau 31 dans le sens de la flèche 36. Par ailleurs, l'ergot 47 vient s'engager dans la rainure 48 de sorte que le côté correspondant du miroir quitte le plateau 31 au fur et à mesure de la rotation de ce dernier. Lorsque l'encoche Z vient en face de l'ergot 38, le miroir 31 a la position 52 représentée en pointillés et tirets, ce qui correspond à la vue schématique de la figure 3c.

La position Z correspond à la position extrême de rotation du plateau 31 dans le sens de la flèche 36. Pour revenir à la position Y puis à la position X, le plateau doit tourner dans le sens inverse de la flèche 36. Dans ce mouvement inverse, l'ergot 47 glisse dans la rainure 48 et s'en dégage à la position Y.

En même temps, la butée escamotable 46 vient verrouiller le miroir sur le plateau (position 50). Si la rotation inverse se poursuit, on revient à la position X de départ qui est aussi une position extrême du plateau 31. En d'autres mots, le plateau 31 ne peut effectuer qu'une rotation de 180° dans un sens ou dans l'autre.

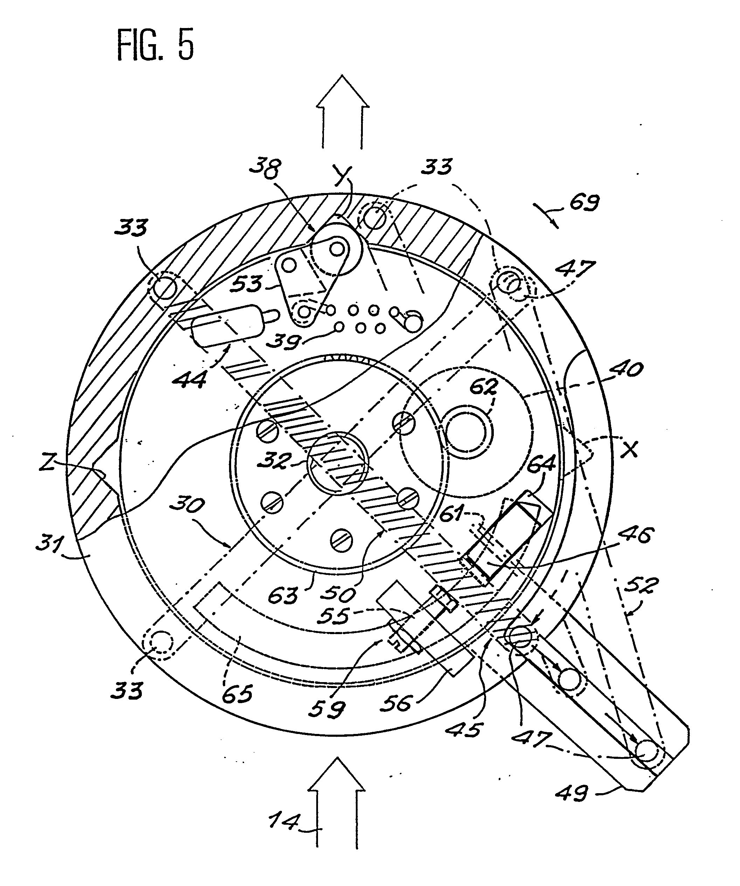

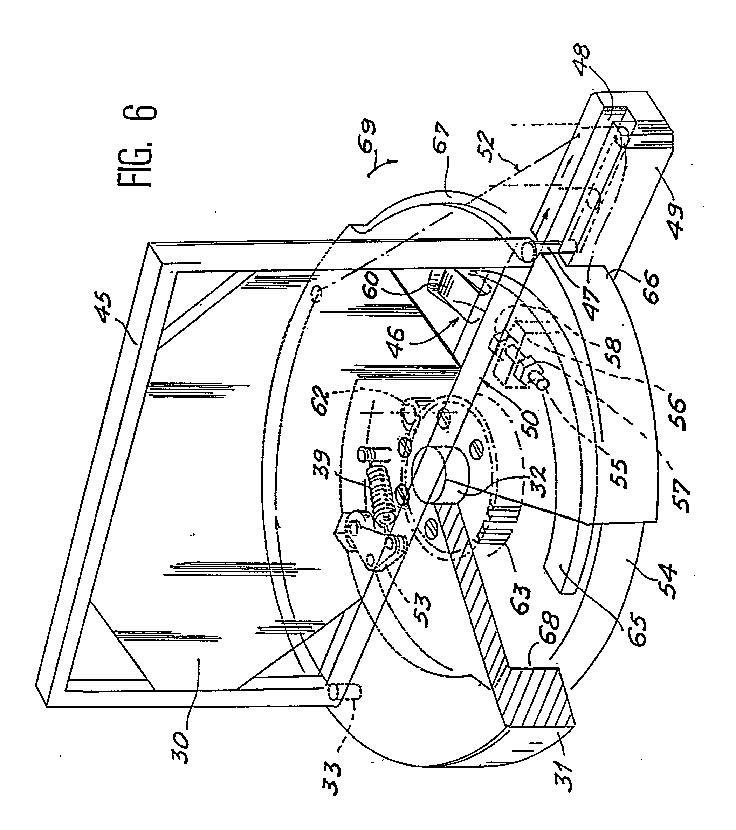

Les figures 5 et 6 montrent de manière détaillée un autre exemple de réalisation du distributeur optique selon l'invention. Sur ces figures, les éléments identiques ou similaires à ceux des figures précédentes portent les mêmes références. Par ailleurs, la position du miroir 30 qui a été représentée est celle de l'encoche Y engagée par l'ergot 38 qui est ici sous la forme d'un galet monté sur un bras oscillant 53; le bras oscillant maintient le galet dans l'encoche grâce au ressort 39. C'est le bras 53 qui, en coopérant avec l'interrupteur 44, coupe l'alimentation électrique du moteur 40. On remarquera que les différentes encoches X, Y et Z sont disposées sur le rebord périphérique intérieur 68 du plateau 31.

Le plateau 31, solidaire d'une roue dentée 63, tourne autour de l'axe 32 qui est porté par un châssis 54 (figure 6). La roue dentée 63 engage directement un pignon denté 62 porté par l'axe du moteur 40. Le miroir 30 est maintenu en place sur le plateau 31 par deux butées, l'une référencée 46 qui est escamotable et l'autre, référencée 59, qui est fixe et réglable.

La butée 59 est constituée par un dispositif comportant une tige filetée 55 qui est vissée sur un épaulement 56 du plateau 31 et dont une extrémité vient en contact avec la partie inférieure du cadre 45. Le vissage ou le dévissage de la tige 55 permet un réglage précis de la position angulaire du miroir 30. Le blocage de la tige est obtenu par des écrous 57 et 58.

La butée escamotable 46, comporte un bras 60 qui oscille autour d'un axe 61 porté par le plateau 31 dans une ouverture 64 de ce dernier. Une extrémité du bras 60 coopère avec le cadre 45 du miroir tandis que l'autre extrémité coopère avec une came circulaire 65 portée par le châssis 54. Ainsi, lorsque cette deuxième extrémité est engagée avec la came 65, la première extrémité n'est plus en contact avec le cadre 45 de sorte que le miroir peut pivoter autour de l'axe 33. Par contre, lorsque la came 65 n'est pas engagée, un ressort (non représenté) maintient la première extrémité contre le miroir qui est, par ailleurs bloqué par la butée fixe 59.

La pièce mécanique 49, de préférence en téflon, dans laquelle coulisse l'ergot 47 est disposée de telle manière que la rainure 48 est dirigée suivant un diamètre du plateau. Afin que l'ergot 47 s'engage dans la rainure 48, à partir de la position du miroir représentée sur la figure 6, la pièce 49 présente à sa partie inférieure, côtés plateau 31 et butée 59, un prolongement 66 qui empêche le miroir d'aller au-delà de cette position angulaire. Par ailleurs, le plateau présente une encoche périphérique 67 sur un secteur angulaire suffisant pour permettre le dégagement progressif de l'ergot 47.

Le fonctionnement du distributeur optique des figures 5 et 6 est identique à celui décrit en relation avec les figures 3 et 4 mais, ici, le sens de rotation du plateau est inversé en ce qui concerne l'explication, c'est-à-dire que l'on passe de la position X, à la position Y et à la position Z en tournant dans le sens de la flèche 69.

**Revendications**

1. Dispositif de déflexion d'un faisceau lumineux (14) caractérisé en ce qu'il comprend un plateau motorisé (31) qui tourne autour d'un axe (32) solidaire d'un châssis (54) et disposé perpendiculairement au faisceau lumineux, un miroir semi-réfléchissant (30) porté par le plateau (31) et dont la face réfléchissante est parallèle à l'axe de rotation (32) du plateau, ledit miroir étant normalement en position pour intercepter le faisceau lumineux (14) lorsque le plateau tourne de manière à le dévier dans les directions souhaitées, ledit dispositif comportant des moyens pour faire pivoter le miroir sur un côté autour d'un axe (33) parallèle à l'axe de rotation (32) du plateau de manière à l'escamoter du trajet du faisceau lumineux pour une certaine plage angulaire du plateau (30) par rapport au faisceau lumineux (34).

2. Dispositif de déflexion selon la revendication 1, caractérisé en ce que les moyens pour faire pivoter le miroir (30) autour de l'axe (33) comprennent un ergot (47) solidaire du miroir (30) et disposé sur le côté opposé à l'axe de pivotement (33), une butée (46) de maintien du miroir solidaire du plateau (31) et s'escamotant à partir du début de ladite plage angulaire et une pièce mécanique (49) solidaire du châssis (54) et comportant une rainure (48) dans laquelle vient s'engager et glisser ledit ergot (47) pour ladite plage angulaire, de sorte que le miroir (30) peut pivoter autour de l'axe (33) au fur et à mesure de la rotation du plateau (31) dans ladite plage angulaire et ne plus intercepter le faisceau (14).

3. Dispositif selon la revendication 1 ou 2, caractérisé en ce que le plateau (31) et le châssis (54) comportent des moyens pour arrêter et maintenir le plateau (31) pour certaines positions angulaires précises du plateau (31) et donc du miroir (30) par rapport au faisceau (14).

4. Dispositif selon la revendication 3, caractérisé en ce que les moyens d'arrêt et de maintien du plateau comprennent des encoches (X,Y,Z) disposées à la périphérie du plateau (31) et correspondant auxdites positions précises et un ergot élastique (38) solidaire du châssis (54) qui vient s'engager dans une desdites encoches (X,Y,Z) de manière à arrêter le mouvement du plateau (31) et à le maintenir dans cette position précise définie par ladite encoche.

5. Dispositif selon la revendication 4, caractérisé en ce que le plateau est entraîné en rotation par un moteur électrique (40) et en ce qu'un interrupteur (44) en série dans le circuit d'alimentation du moteur (40) est associé avec l'ergot élastique (38) de manière à couper le circuit d'alimentation lorsque l'ergot (38) est engagé dans l'une des encoches (X,Y ou Z).

FIG. 1 a

FIG. 1 b

FIG. 1 c

FIG. 2 a

FIG. 2 b

FIG. 3 a

FIG. 3 b

FIG. 3 c

FIG. 4

EP 0 390 641 A1

# FIG. 5

FIG. 6

EP 0 390 641 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 7, no. 238 (P-231)[1383], 22 octobre 1983; & JP-A-58 123 502 (HITACHI SEISAKUSHO K.K.) 22-07-1983 * Résumé * | 1-5 | G 02 B 26/08 |
| A | DE-A-3 804 198 (OLYMPUS OPTICAL CO., LTD) * Revendication 1; figures 5,6 * | 1 | |
| A | US-A-4 705 349 (REEDY) * Revendicaton 1; figures 1,2 * | 1 | |
| A | US-A-3 622 786 (WALKER et al.) * Colonne 3, lignes 10-29; figure 1 * | 1 | |

DOMAINES TECHNIQUES
RECHERCHES (Int. Cl.5)

G 02 B
G 03 B
H 05 G

Le présent rapport a été établi pour toutes les revendications

| Lieu de la recherche | Date d'achèvement de la recherche | Examinateur |
|---|---|---|
| LA HAYE | 21-06-1990 | GRUNFELD M.Y.E. |

EPO FORM 1503 03.82 (P0402)